## Europäisches Patentamt
## European Patent Office
## Office européen des brevets

(19)

(11) Publication number: **0 202 424**
**B1**

(12)

# EUROPEAN PATENT SPECIFICATION

(45) Date of publication of the patent specification:
01.08.90

(51) Int. Cl.⁵: **B03B 9/06**, B07B 9/00

(21) Application number: 86103840.4

(22) Date of filing: 20.03.86

(54) Apparatus for the primary selection of solid urban waste.

(30) Priority: 01.04.85 IT 2017885

(43) Date of publication of application:
26.11.86 Bulletin 86/48

(45) Publication of the grant of the patent:
01.08.90 Bulletin 90/31

(84) Designated Contracting States:
AT BE CH DE FR GB LI LU NL SE

(56) References cited:
DE-A- 2 219 581
DE-C- 361 035
FR-A- 2 104 101
GB-A- 426 533
GB-A- 684 953
US-A- 3 987 970
US-A- 3 993 256

(73) Proprietor: SECIT S.p.A., Viale Ortles, 52,
I-20139 Milano(IT)

(72) Inventor: Dagnino, Cav. Ugo, Via General Fara, 26/A,
I-20124 Milano(IT)
Inventor: Rossi, Elia, Via Val Bavona, 2/C,
I-20147 Milano(IT)

(74) Representative: DI Iorio, Giuseppe, Dr.-Ing., c/o
NOVELTY SERVICE Galleria Buenos Aires, 15,
I-20124 Milano(IT)

## Description

The invention concerns an apparatus for the primary selection of solid urban waste of type as specified in the preamble of the first claim.

As is well known, the increase in the consumption of alimentary products and their packaging, the increased use of paper and plastic materials, have caused a considerable increase in the production of solid urban waste. So, for the destruction of these great masses of material, two systems were used initially; rubbish dumps or tips and incinerators, both of which were unproductive and ecologically injurious.

Later, it was considered essential to find a solution to the systematic destruction of those materials which could otherwise be re-cycled with economic benefits. Thus, the idea of selecting certain categories of waste, with the objective of recovering the greatest amount possible and, at the same time, solve a very important ecological problem. In fact, this recovery, independently of the re-use, would have reduced the phenomenon of soil and atmospheric pollution.

So, solid urban waste disposal was dealt with by means of re-cycling systems.

However, the re-cycling plants in use at present are complicated, expensive and require, for the sole purpose of primary selection, several separate pieces of apparatus. On average, between mills, machines, sorters and conveyors, about thirty are required.

All this requires the difficult co-ordination and balance of the various operations as well as considerable space on the ground and in the air, substantial structural works and a large labour force for operation and maintenance. Furthermore, the power consumption on the whole is very high as are the costs of the plant. But especially, existing plants do not allow an operating adjustment to qualitative and quantitative variations in the nature of the waste materials. The preparation and start-up times of the plants are also considerable.

Two examples of separate apparatus for the mechanical treatment of materials are shown in the patents DE-C 361.035 and US-A 3.993.256.

The German patent No. 361.035 discloses a screening apparatus consisting of a cylindrical metal container. The screening or selection of materials is carried out by means of a series of superposed, spaced plates having calibrated perforations and rotating around the container's axis.

During this rotation, part of the materials is ejected externally by the centrifugal force, while the remaining, unscreened part drops on the underlying plate through the perforations. These last are of decreasing dimensions from the top the bottom plates.

This device is however suitable to select particular solid and dry materials only, such as coal, i.e. already chopped. It is not therefore functional for the screening of solid urban waste, which, owing to its nature and composition, requires to be shredded prior to the screening in the different components.

In fact, the materials waste are usually contained in sacks or loose and consist of components of different kinds and sizes- such as glassware, cardboard boxes, coarse organic, plastic film, textiles, etc. and other materials in the form of a ribbon or in the pasty state.

Furthermore, in the known apparatus, exists the danger that films, threads, ribbon and the like may wind around the rotating central shaft, undermining the smooth run of the apparatus.

The structure of this type of screener is also complex and expensive as it requires conical or cup plates with a decreasing curvature from the top to the bottom ones. Furthermore, the ejection of the selected components is carried out by spiral-shaped discending chanals which might be clogged by the material, particularly by films, ribbons, etc. The cup shape of the plates could also produce an excess build-up of material at the bottom of the cup itself.

It should also be noted that the central drive shaft does not allow independent control of the rotating speed of the different plates in accordance with the nature and the conditions of the materials, such as differences in moisture contents, etc.

The US patent No. 3.993.256 discloses an apparatus for the shredding of urban waste, consisting of a cylindrical container with a central shaft driving two sets of blades at the same speed.

The first set compresses and pushes down the material to be treated, which is subsequently cut and shredded by the second set.

To this effect, the blades of the second set are tapered towards the free end, with oscillating chains fixed at their tips. During the rotation owing to the centrifugal effect, the chains rise and strike the internal wall of the container, producing the final shredding of the material, which is the essential function of the apparatus.

This device is consequently unable to carry out a complete treatment of solid urban waste through a first bursting of the sacks and breaking up of the materials and subsequent screening or selection in the different components.

In this known apparatus also exists the danger of film, ribbons etc. winding around the central driveshaft. Furthermore, if the waste include a mix of such components and materials in the form of paste, an unwanted clogging in the area of the pushing blades might take place.

Also this apparatus is costly and complex. In fact, it requires two sets of blades rotating within a drum which, in turn, calls for an abrasion-resistant lining of the inner wall and for an appropriate supporting structure.

The aim of this invention is to provide an apparatus which combines in a single unit all mechanical devices of a primary selection of the waste, i.e. to carry out a complete process of shredding and fractioning of the materials to be treated and subsequent screening in the different components, ensuring at the same time a high-recovery rate of selected output materials. Another aim of the invention is to provide an apparatus which eliminate all the drawbacks of operation, costs and overall dimensions of the present plants in the primary selection of urban waste.

According to the invention, the above-mentioned and other aims are achieved by an apparatus for the mechanical selection of materials wherein the selection in different components is carried out by means of a series of selection plates placed, one on top of the other, on the inside of a cylindrical metal container and having calibrated perforations in such a way that, during their rotation around the axis of the container, a part of the material to be selectioned is ejected to the outside, because of the centrifugal force, while the not selected remaining part passes in the selection plate below through the calibrated perforations; the dimension of the perforations being decreasing passing from the first plate on the top to last one on the bottom, characterized by the fact that the selection plates consist of level plates or disks each having the calibrated perforations in an intermediate annular part and setting the lower limit of a selection chamber directly connected to the outside by means of at least one side opening in the container wall, and (each plate), peripherally sealed, rotating around the axis of the container at a level below the side opening for the ejection to the outside of the selected material (component) also because of an air current created in the chamber and that the first selection chamber receives the material through moving parts rotating around the axis of the container and setting the lower limit of the loading chamber of the material to be treated, especially solid urban waste, which burst the sacks containing the waste and break up the material in such a way as to reduce the dimension and make it suitable for the successive operations of selection of the components and that the last selection chamber supplies the not ejected residual material to a receiving and ejection chamber located below through the perforations of the respective plate; said receiving chamber being directly connected to the outside by means of at least one side opening in the container wall and including a blind level plate or disk setting its lower limit at a level below the side opening, peripherally sealed and rotating around the axis of the container for the complete ejection to the outside of the last components through the side opening also because of an air current created in the chamber.

Further characteristics and advantages of the apparatus will be obvious from the following description referring to the attached drawings, which are only for illustrative purposes and have no limiting character, of two preferred embodiments of the invention. In the drawings:

Figure 1 shows in elevation, a general plant for the selection of solid urban waste, using the apparatus according to the invention;

Figure 2 shows schematically, in longitudinal section an apparatus according to the invention in a first embodiment (peripheral motorization);

Figure 3 shows schematically, in longitudinal section and on a larger scale, an assemblage of plates for sack-bursting and breaking-up used in the apparatus shown in fig.2;

Figure 4 is a plan view along line IV-IV of the plate assemblage shown in fig.3;

Figure 5 shows schematically, in longitudinal section and on an enlarged scale a sorting plate (D1) of the apparatus shown in fig.2;

Figure 6 is a plan view along line VI-VI of the sorting plate shown in fig.5;

Figure 7 shows schematically and in longitudinal section a second embodiment of the apparatus according to the invention (centralized motorization);

Figure 8 shows schematically, in longitudinal section and on an enlarged scale, a sorting plate (D1) for the apparatus shown in fig.7;

Figure 9 is a plan view along line IX-IX of the sorting plate shown in fig.8;

Figure 10 shows the drive system for the sorting plates of the apparatus shown in fig.2; and

Figure 11 shows the drive system for the sorting plates of the apparatus shown in fig.7.

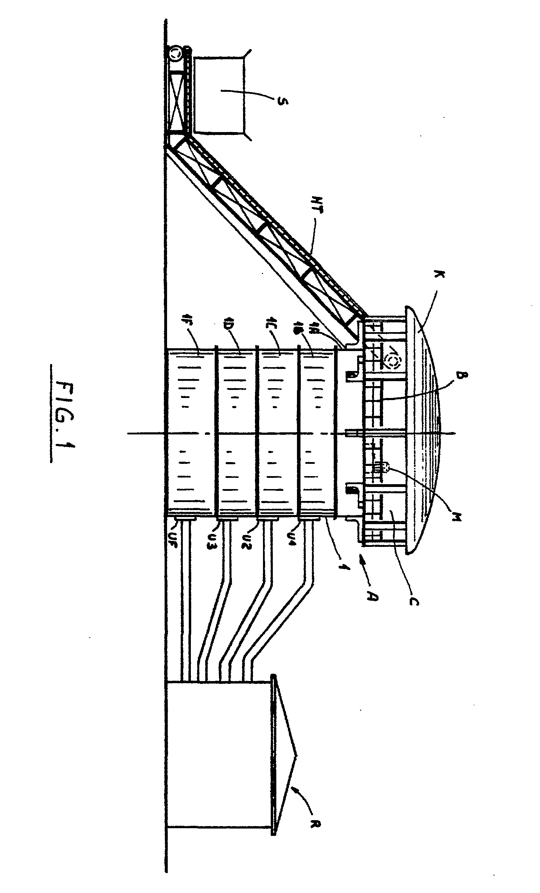

The general plant for the selection of urban waste shown in figure 1 consists of a collection site S for all the materials, for example a rubbish dump or tip, the primary selection apparatus A - the object of the invention - and a recovery site R for the components (output) selected by apparatus A.

At the collection site S means (not shown) are provided for the elimination of bulky items from the material, that is, items which because of their nature are excluded from the process of re-cycling. Among these are: water-heaters, domestic appliances in general, metal tanks and scrapped car bodies and other materials of considerable weight and dimensions.

The material selected in this way is carried to the apparatus A by a conveyor belt NT which unloads it continuously into the loading chamber C.

The apparatus is composed of a metal shell or cylinder 1 formed by several component cylinders 1A, 1B, 1C etc., one on top of another and bolted together with the objective of making transport and assembly easier.

As will be explained later, in the apparatus A, the waste materials are sorted in the various components, which they leave by the outlets U1,U2,U3 etc and from there by means of piping to the recovery site R to be used directly and/or to be subjected to further treatment.

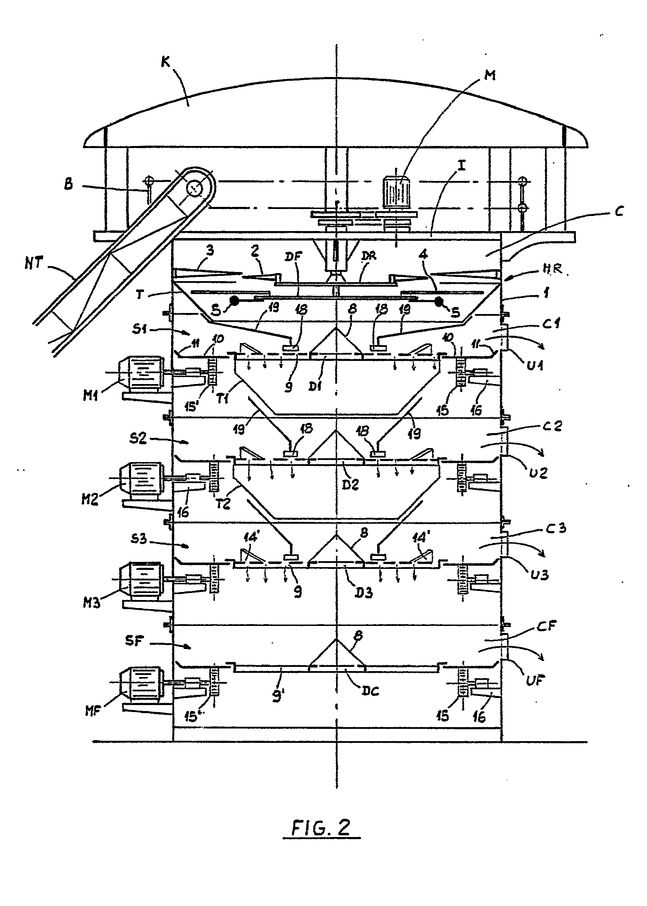

Apparatus A is illustrated in detail in figures 2 to 11, and the same references are used throughout for the parts. According to the invention, there are, on the inside of container cylinder 1, in sequence, from top to bottom, the following:

-1 the loading chamber C into which, as previously said, the conveyor belt NT discharges the material to be sorted, contained in plastic sacks or loose;

-2 parts MR rotating around the axis of container 1 which set the lower limit of the chamber C and which burst the sacks and break up the material;

-3 a plurality of units S1,S2,S3, etc for the selection of the broken-up materials, placed one on top of the other, in number equal to the number of selections required; each unit sorting the material on the basis of volume and specific weight; and finally

-4 a receiving and ejection unit SF for the remaining material located underneath the last selection unit.

In more detail, the loading chamber C is located at the top of the cylinder, protected by a covering K, is open-sided and can be inspected from the circular terrace which is bordered by a handrail B.

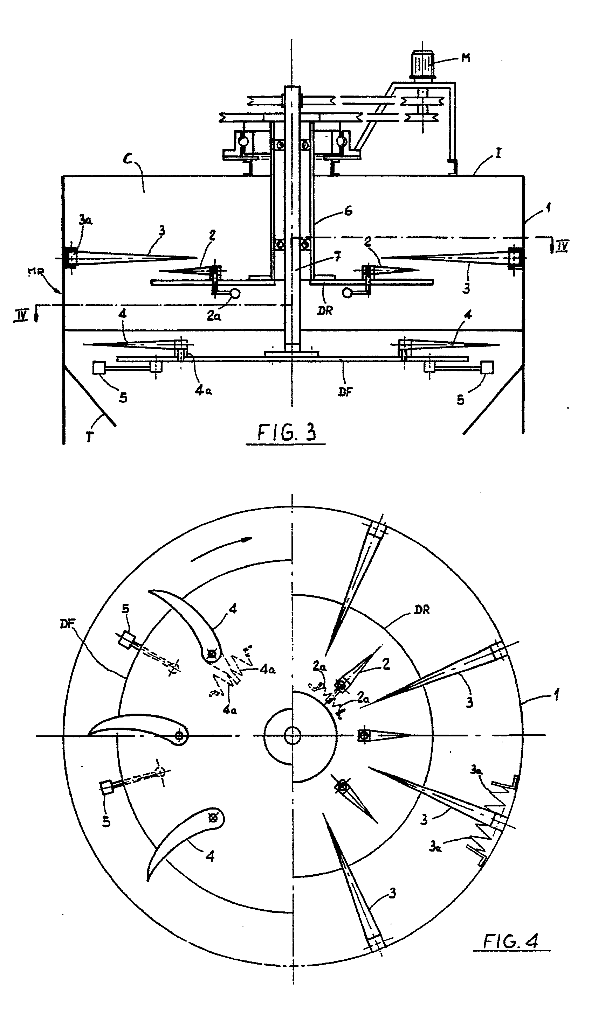

The rotating parts MR, in a simple form of the embodiment, ( see figures 2,3,4 & 7 ) and for whatever drive-system is used for the apparatus, consist of two coaxial circular plates DR and DF, one above the other, rotating free of the periphery inside the container 1. The upper plate DR, to be called the sack-bursting plate, rotates at the base of chamber C and has a plurality of radial blades 2 which interact with a plurality of fixed radial blades 3, distributed on the circumference of the inner wall of cylinder 1. The lower plate DF, to be called the breaking-up plate, defines the upper limit of the first selection chamber C1 and rotates at a rate faster than plate DR. On its periphery, there is a plurality of radial scimitar-shaped knives 4 (see figure 4).

In fact, because of the interaction of fixed and rotating blades, the sack-bursting plate DR causes both the bursting of the plastic sacks and a first loosening and breaking up of the material.

Then, the breaking-up plate DF completes the loosening and breaking up of the waste in such a way that the material arrives in the first selection chamber C1 in dimensions suitable for the mechanical selection operations it will undergo.

During the rotation of the plates, the material passes from chamber C to chamber C1 through a peripheral anular passage ( peripheral route ) formed by the periphery of the plates and the internal surface of cylinder 1 and of a hopper T as will be explained later. During this passage, after the bursting of the sacks, the material, especially glass, ceramics and the like, undergo breaking and shattering by means of swinging hammers 5 which are rotated by one of the plates.

Preferably, the shattering will happen after the breaking-up and the hammers 5 are rotated by plate DF ( see fig. 2,3 & 7 ).

Basically, the same peripheral passage is airblown when, during the rotation of the plates, air is sucked from chamber C to chamber C1.

The knives 4 are scimitar-shaped to avoid material blocking or sticking to them during the breaking-up phase. The rotating blades 2, the fixed blades 3 and the knives 4 are maintained in their normal working positions by means of spring-mountings which allow a small degree of rotation on their own axes, when they are occasionally subjected to considerable force coming into contact with materials which are big and solid; naturally, these spring-mountings are capable of returning the blades and knives to their normal working positions after the cause of the rotation is gone.

These spring-mountings are shown schematically by 2a for the rotating blades, 3a for the fixed blades and 4a for the knives ( see figures 3 & 4 ).

The plates DR and DF are driven by an electric motor M mounted on a support I borne by the cylinder at the level of loading chamber C ( see figures 1,2,3 & 7 ).

The motor M drives the two plates by means of a double tubular shaft 6 & 7 (see figure 3 ) ; the inner shaft 7 is driven faster. The plate DF must rotate at high speed as it must effect the breaking-up of the material; on the contrary, plate DR must rotate at low speed, its only function being to open the sacks and to effect the first loosening of the material.

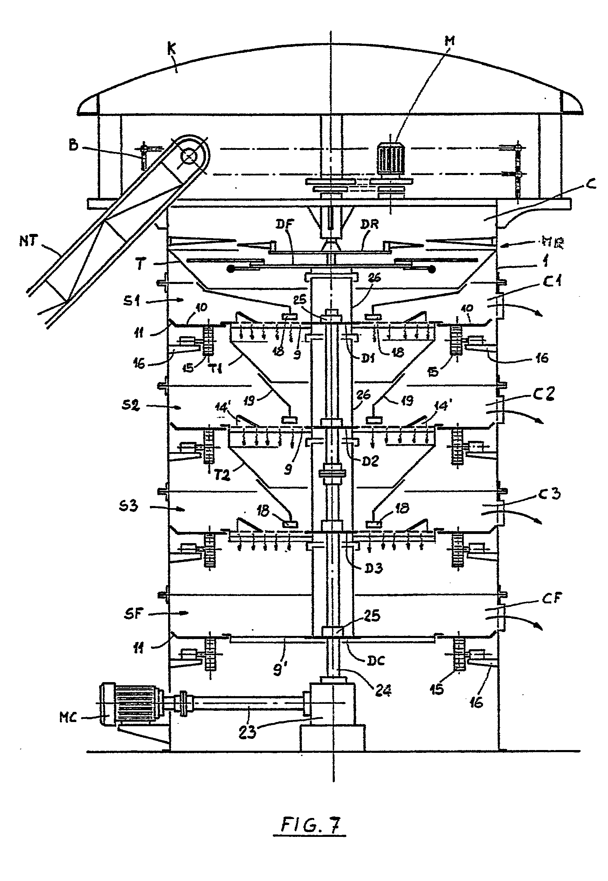

As stated, the selection units are a plurality, equal in number to the selections desired, but in the apparatus illustrated in figures 2 & 7, only three S1, S2 and S3 are shown. Each one consists of a selection chamber C1, C2, C3 and a specific selection level plate or disk D1, D2, D3, sealed peripherally and rotating around the axis of the container 1.

With particular reference to figures 2, 5 and 6 which show the plates with periphery drive, each selection plate consists of a cone-shaped central part 8 which protrudes from the plane, an adjacent outside annular part 9 provided with acceptance perforations, another successive annular flat part 10 and finally a periphery part 11 which consists of an elastic membrane which is ring-shaped. The cone 8 has the function of radially spreading the arriving material in each chamber C1, C2, C3. In fact, its sloping surface carries the material towards the perforated or active part 9 of the plate. This part is the sifting surface of the plate because it has a plurality of calibrated perforations which connect two successive selection chambers. The diameter of the perforations depend on the specific selection of the plate. So, the perforations of plate D1 are a greater diameter than the perforations of D2 and these in turn are greater than the perforations of D3. So, the dimensions of the perforations decrease passing from the first plate on the top D1 to the last one on the bottom D3.

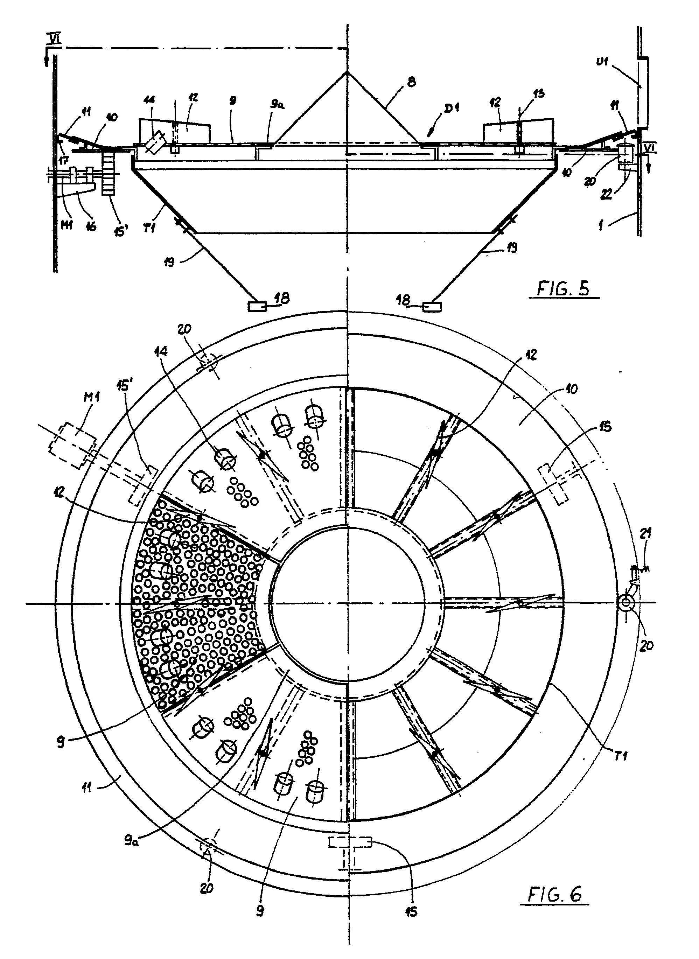

Radial fins 12, which have the function of guaranteeing efficient ventilation during the rotation of the plate in each chamber, are mounted on the circumference of the perforated part 9. The ventilation produced by the fins is added to the radial effect of the centrifugal force and facilitates the ejection to the outside of the component selected. Clearly, these fins are more useful on the first plate D1 which is for the selection of the bigger and lighter materials than on the successive plates. Because of this, the fins of the lower plates can be of smaller number and/or dimension with the advantage of reduced power consumption. The ventilating fins 12 are mounted on rotating studs 13 so that their angling can be adjusted during the setting up phase. During the rotation, they maintain the angle preset. Increased ventilation can be obtained by blowing of external air. On the perforated part 9, there are also means to facilitate the passage of material to the chamber below and/or to ihibit the movement of material towards the periphery, so that the efficiency acceptance of the sifting surface 9 is improved. These means, in the first case, could be protruding angled openings 14, preferably distributed on a peripheral crown of the perforated part 9 (see figures 5 and 6) and in the second case, obstacles 14' distributed on said perforated part and protruding from it as shown in figures 2 & 7. The flat ring part 10 which adjoins the perforated part 9, forms a track by means of which the plate is supported on rubber rollers 15 circumferentially arranged below and borne by brackets or shelves 16 fixed to the inside of the container wall 1 (see figures 2, 7, 8 & 9). If there are three rollers, they are placed at 120° from each other. One of the supporting rollers like 15′ could be a drive roller in which case it is rotated by its own electric motor located on the outside of the container (see figures 2, 5 & 6). If the plates D1, D2, D3 are activated by their own motors M1, M2, M3 by means of their respective drive wheel rollers 15′ then the apparatus is peripherally or independently driven (see fig. 2). Naturally, each motor is fitted with a variator to permit changes in the plate-speed at will.

With periphery drive, each plate can rotate at a speed and in a direction different from the others.

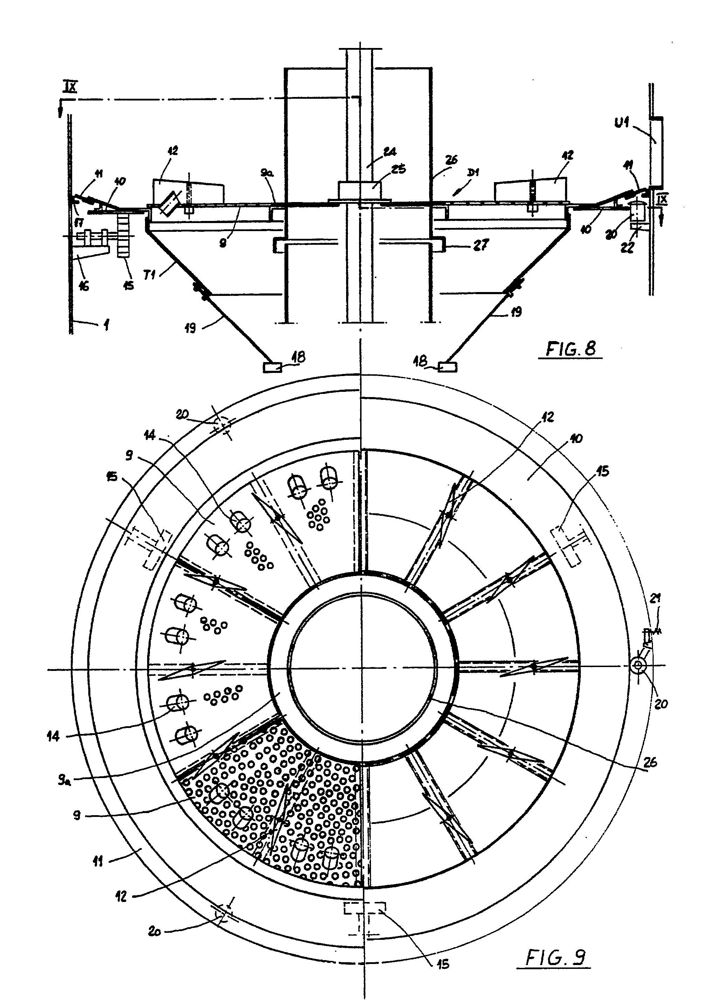

The end or peripheral part 11 of each plate consists of an elastic sealing ring fixed to and protruding from the plate which rotates freely by the rim on a sealing ring 17 fixed on the inside of the container just below the side opening U1 or U2 etc. (see figs. 5 and 8). Each plate rotates at a level below the respective side opening and the peripheral part 11 carries the selected material towards the side opening by means its sloping surface.

It is this sealing ring 11 which ensures the peripheral seal of each plate. In fact, the material which reaches one selection chamber and is not ejected to the outside, passes by gravity to the next chamber below only through the perforations in part 9.

The material in each chamber to be transferred to the chamber below is conveyed to the active perforated part 9 of the plate by means of frustum-shaped hoppers T,T1,& T2. The topmost hopper T, located below the assemblage of plates for sack-bursting and breaking-up DR and DF, is fixed to the container, while the others T1 and T2, located below the perforated part 9 of the plates are borne and rotated by the plates. To prevent the material in arrival from stopping on anular area 9a immediately around the cones 8, there are at least two activating paddles 18 which sweep this area during the rotation of the plates so as to shift the material resting there into the perforated or active part of the plate.

These paddles are borne by their respective hoppers on swinging arms 19. This means that the paddles attached to the first hopper T function because of the rotation of the plate D1 below, whereas the other paddles attached to the hoppers T1 and T2 function also because of the rotation of the plates to which they are attached.

Each plate is mounted in the container in a self-centring manner. For this purpose, at the periphery of each plate there are spring-mounted centring devices, each one consisting of an idling roller 20 pressing against the rim of part 10 by means of a spring-mounting 21. The centring rollers 20 are located around the plate and are borne by shelves or brackets 22 fixed to the inside of the container wall 1 ( see figures 5,6,8&9 ).

Ideally, there are three centring rollers placed at 120°C to each other.

Their function is to permit and take up small lateral displacements of the plate caused by big and solid pieces of material which could accidentally get between the rim of the plate and the container 1.

What has previously been said for the selection units S1, S2, S3 also goes for the receiving and ejection unit SF. Similarly, this unit has a receiving chamber CF and an ejector plate DC located below the last selection chamber and that is, for the example taken, below C3. The chamber CF is connected to the outside by an side opening UF in the wall of the container 1.

Like the selection plates, the plate DC is supported by rollers 15 and is rotated by a drive wheel roller 15′ which is driven by its own electric motor MF on the outside and, furthermore, is centred in the container by means of centring devices 20, 21.

An essential difference between unit SF and the other selection units is the fact that plate DC is blind, that is the centre part 9′ is not perforated but solid and furthermore the plate is not provided with the angled openings 14 and the obstacles 14′. This difference is because the only function of plate DC is to eject to the outside through the opening UF the residual material which arrived from chamber C3 through the perforated part 9 of plate D3.

Plate DC therefore, in this unit, acts only as a means to eject material. Another difference in unit SF is, that the material arriving in chamber CF falls freely onto plate DC, as there is no hopper. Consequently, there are also no activating paddles 18.

Figures 7, 8 & 9 show the apparatus previously described but with the selection plates D1, D2, D3 and the ejector plate DC centrally driven.

For this purpose, a single electric motor MC, located at the bottom of the container 1, which, by means of an intermediate transmission 23 if the motor is not in line with the container, and a single central shaft 24, drives all the plates D1, D2, D3, DC at a uniform speed.

This motor MC also is fitted with a variator to permit a change in the speed of all the plates at the same time. Naturally, with this type of drive (see figures 7,8 & 9) all the rollers 15 are idling rollers and their function is only that of supporting the rotating plates.

The coupling of shaft 24 to each plate is by means of flexible couplings 25 which, together with the centring devices mentioned previously, allow of slight lateral displacements of the plates due to big and solid pieces of material getting into the periphery.

Another characteristic of the centre drive is the provision in each chamber S1,S2,S3 and SF, around the shaft which crosses it, of a protective sleeve 26 so that sheets of plastic and strips of paper do not get wrapped around the shaft during its rotation. These sleeves are borne by each plate and therefore rotate with them. For the protection of the shaft along its entire length, the sleeves are axially coupled by inserting the end of one section into the enlarged mouth opening of another as shown more clearly in figure 8.

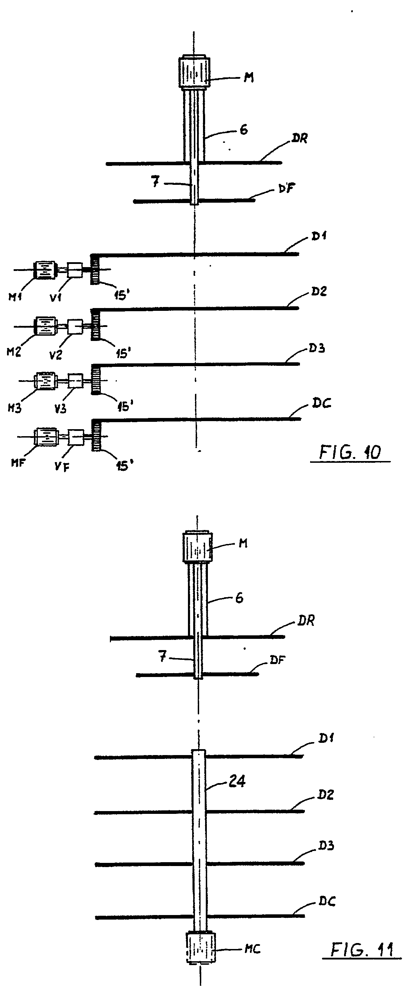

Finally, figures 10 & 11 show schematically the two drive systems for the apparatus according to the invention. In figure 10 (peripheral motorization) each motor M1,M2,M3,MF drives a plate by its respective speed variator V1,V2,V3, VF and respective drive roller 15'.

In figure 11 (centralized motorization) a single motor MC drives all the plates at the same speed by means of the central shaft 24.

In both drive systems, the sack bursting plate DR and the breaking up plate DF are driven by the same motorization system.

Naturally, peripheral motorization gives the apparatus a greater flexibility of application.

In fact, when there are substantial variations in the composition of the waste, whether due to seasonal variations, and/or peaks in tourist presence, and/or increases in the degree of humidity, the rotation speed of plates D1,D2,D3 can be modified to maintain the optimum effects of selection in spite of qualitative and quantitative variations in the material.

Furthermore, the independent drive system gives the possibility of rotating one or more plates in the opposite direction to the others. In this way, the rotation speed of the activating paddles 18 will be the sum of the speeds of the facing plates rotating in opposite directions with the result of a more effective movement of the material. Reference has been made previously to the two rotating parts DR & DF for the loosening and breaking up of the material. Clearly, the structure of this device may vary according to the situation. It is essential that is be capable of bursting the sacks and subsequently, breaking up and shattering the materials. So the device could consist of a mill or similar. Furthermore, the device could be completely absent from the container in which case, the same operations would be performed on the materials before being unloaded into chamber C, without going outside the scope of the invention.

Another variation could concern the selection plates D1,D2 and D3.

Instead of being flat, they could be conical with a rising slope from the centre to the periphery, at least in the perforated part 9.

This expedient could be advantageous in high-powered apparatus with the objective of increasing the selection capacity by means of increased gravity in the active part 9. In any case, there is an advantage in forming the plates of removable segments, perforated or not, so that, in case of necessity, replacements may be made.

The functioning of the apparatus is now described briefly.

Generally, the material which reaches a selection chamber is rotated on its respective perforated plate and, because of the centrifugal force and the ventilation created by the fins 12, is ejected in part for later use, and in part passes through the calibrated perforations in the plate to the chamber below. The part which is ejected (selected) is that with the greater volume. The part which is not ejected and which passes to the chamber below, is generally that which is heavier and less voluminous.

The mechanical process of ejection and falling of the material is repeated from the first to the last selection chamber so that the residual material which reaches the final receiving chamber CF is the finest which was not ejected from the preceding selection chambers because it passed through the perforations in all the preceding plates. The residual material is ejected to the outside from chamber CF by the blind plate DC.

The selection phases of the apparatus are now described taking the case that the material reaching the loading chamber C substantially consists of paper, cartons, plastic, various solids, iron, coarse organic, fine organic and unspecified.

The effect of the rotation of plates DR and DF is that the material is carried to the first selection chamber C1 passing across the periphery of these plates. On its way, the material is subjected, firstly, to blades 2 and 3 of plate DR which burst the plastic sacks which contain it, and it undergoes a first loosening up, and then it is subjected to the scimitar-shaped knives 4 and the swinging hammers 5 of plate DF which complete the loosening up and break up and shatter the material.

In chamber C1, the broken up material which has all the components with which it started, undergoes the first selection.

Because of the rotation of plate D1, by the combined effect of the centrifugal force and the ventilation produced by the fins 12, some components, specifically the paper, cartons and the plastic film, are radially ejected to the outside through the opening U1 while the remaining components pass through the perforated part 9 of the plate and reach the selection chamber C2 below.

The paddles 18 help in this and successive phases of selection.

The components selected and available at the exit of the opening U1 may be subjected to further treatment before use; for example, the paper and cartons may be transformed into paper pulp, the plastic film may be transformed into granules for industrial use etc.

The components accepted by plate D1, that is, the hard plastics, solids, iron, coarse organic, fine organic, and unspecified, reach chamber C2. The mechanical selection process is repreated in this chamber as in chamber C1. The plate D2 carries the above mentioned material in rotation; because of the effects of centrifugal force and the ventilation, the material is, in part, ejected through the opening U2 and, in part, falls through plate D2 to the third selection chamber C3.

The part ejected consists of the hard plastics, solids, iron and unspecified whilst the part accepted by plate D2 which passes to chamber C3 consists of coarse organic and fine organic.

Similarly, in chamber C3, plate D3 ejects the coarse organic through the opening U3 and lets the fine organic pass through its perforations.

The last chamber CF, therefore, receives the residual material which consists, as stated, of fine organic.

This component is completely ejected to the outside through the opening UF by the blind plate DC which, as stated, in this last chamber has the function of ejecting only.

From what has been described above, the apparatus satisfied all the mentioned objectives which were the basis for the invention.

First and foremost, all the functions for the primary selection, in a single cylinder containing all the working mechanisms, are permitted without the necessity of costly construction work for the installation.

For its running, two skilled operatives are sufficient for each shift. The first is responsible for receiving the waste materials and transferring them to the conveyor belt; the second is in charge of the central control which is located at the top of the apparatus. A control panel for the various motors with their regulators as well as a television to monitor each rotating plate is installed in this central control so that the regular functioning may be ascertained.

If necessary, the second operative can reach each of the various receiving and selection chamber levels by lift. The overall space occupied by the apparatus is very limited, as the apparatus is a single, self-contained unit without external infrastructures.

The container cylinder, being composed of cylindrical units, presents no problems for transport and installation.

The power consumption is very limited because there is only one conveyor (feeder) and the rotating plates consume very little power.

But a very important characteristic of the apparatus, which must again be stressed, is that its functioning can be adapted, within very wide limits, to quantitative and qualitative variations of the waste materials by means of the independently driven plates.

**Claims**

1. Apparatus for the mechanical selection of materials wherein the selection in different components is achieved by means of a plurality of selection plates placed, one on top of the other, on the inside of a cylindrical metal container and having calibrated perforations in such a way that, during their rotation around the axis of the container, a part of the material to be selectioned is ejected to the outside, because of the centrifugal force, while the not selected remaining part passes in the selection plate below through the calibrated perforations; the dimension of the perforations being decreasing passing from the first plate on the top to last one on the bottom, characterized by the fact that the selection plates consist of level plates or disks (D1, D2, D3) each having the calibrated perforations in an intermediate annular part (9) and setting the lower limit of a selection chamber directly connected to the outside by means of at least one side opening (U1, U2, U3) in the container wall, and (each plate), peripherally sealed, rotating around the axis of the container at a level below the side opening for the ejection to the outside of the selected material (component) also because of an air current created in the chamber and that the first selection chamber (C1) receives the material through moving parts (MR) rotating around the axis of the container and setting the lower limit of the loading chamber (C) of the material to be treated, especially solid urban waste, which burst the sacks containing the waste and break up the material in such a way as to reduce the dimension and make it suitable for the successive operations of selection of the components and that the last selection chamber (C3) supplies the not ejected residual material to a receiving and ejection chamber (CF) located below through the perforations of the respective plate (D3); said receiving chamber being directly connected to the outside by means of at least one side opening (UF) in the container wall and including a blind level plate or disk (DC) setting its lower limit at a level below the side opening, peripherally sealed and rotating around the axis of the container for the complete ejection to the outside of the last components through the side opening also because of an air current created in the chamber.

2. Apparatus according to claim 1, characterized by the fact that the rotating parts (MR) consist of two coaxial plates (DR, DF) peripherally rotating free of the container wall, of which:
   - the first (DR - the sack-bursting plate), the upper of the two, rotating at the base of the loading chamber (C) and having a plurality of radial blades (2) which interact with a plurality of fixed radial blades (3) circumferentially set in the inside of the container (1) wall, in such a way that, during the rotation of the plate, because of the interference between the moving and fixed blades, the bursting of the sacks containing the materials and a first loosening and breaking up of the materials is achieved; and
   - the second (DF - the breaking up plate) rotating faster than the first plate, having at its periphery a plurality of radial knives (4), preferably scimitar-shaped, in such a way that, during the rotation of the plate, the loosening and breaking up of the materials is completed;

the passage of the material from the loading chamber (C) to the first selection chamber (C1) being by way of the periphery of the plates (peripheral passage); during this passage, the material, especially glass, ceramics, etc., being subjected, preferably after the final breaking up, to shattering by means of hammers (5) rotated by one of the plates.

3. Apparatus according to claims 1 and 2, characterized by the fact that the material from the loading chamber (C) and the selection chambers, to be transferred to successive selection chamber is conveyed to the central perforated part (9) of the plate below by a hopper; the hopper (T) below the sack-bursting and breaking-up rotating parts being supported by the container; the other hoppers (T1, T2) being borne by the respective selection plates which load them; each hopper having, at the lower part, a central material agitator which, when running, works in such a way as to shift the material which might rest in the ring area (9a) of the plate below around the axis of rotation, towards the outside perforated part (9) of the plate.

4. Apparatus according to claim 3, characterized by the fact that the agitator of the material consists of at least two paddles (18) connected to the hopper above by means of swinging arms (19).

5. Apparatus according to claim 1 and either of claims 3 or 4, characterized by the fact that the peripheral sealing of the plates (perforated or blind), is achieved by means of a circular, elastic membrane or sheet (11), fixed to and protruding from the periphery of the plate, which rotates freely by the rim on a sealing ring (17) located to the inside of the container wall just below the side opening.

6. Apparatus according to claim 1 and any one of the claims 3 to 5, characterized by the fact that the ventilation of the selection chambers and of the final receiving chamber, is achieved at least by means of radial fins (12) circumferentially distributed on the perforated part (9) of the respective plate (perforated of blind) which can be fixed at varying angles to their own axes during the setting up phase.

7. Apparatus according to claim 1 and any one of the claims 3 to 6, characterized by the fact that the perforated part (9) of selection plates have a conical surface rising towards the periphery which slows down the displacement of the material towards the periphery.

8. Apparatus according to claim 1 and any one of the claims 3 to 7, characterized by the fact that the selection plates have, corresponding to the perforated part (9), protrusions (14') which project from the level which obstruct the displacement of the material towards the periphery.

9. Apparatus according to claim 1 and any one of the claims 3 to 8, characterized by the fact that the selection plates have, corresponding to the peripheral perforated part (9), angled protruding openings (14), capable of catching the material not yet accepted and to facilitate its passage to the chamber below.

10. Apparatus according to claim 1 and any one of the claims 3 to 9, characterized by the fact that each plate (perforated or blind) rests, with a flat peripheral surface (track 10), on at least three rollers, rubberized for preference, placed at 120° to each other and borne by the inside wall of the container.

11. Apparatus according to claim 1 and any one of the claims 3 to 10, characterized by the fact that each plate (perforated or blind) is centred in the container by means of at least three centring devices peripherally spring-mounted at 120° to each other, capable of allowing and taking up slight lateral displacements of the plate and borne by the inside wall of the container.

12. Apparatus according to claim 11, characterized by the fact that each centring device is composed of an idling roller (20) pressing against the rim of the plate by means of a spring-mounting (21).

13. Apparatus according to claim 1 and 2, characterized by the fact that the moving parts (DR, DF) for bursting the sacks and breaking up the material are driven by an electric motor (M) borne by the container, by means of a tubular twin shaft (6, 7) with different speeds, the higher speed shaft (7) being connected to the breaking up plate (DF).

14. Apparatus according to claim 1 and any one of the claims 3 to 12, characterized by the fact that each plate (perforated or blind) is driven by a drive-wheel roller (15') driven by its respective electric motor (M1, M2, M3, MF) in such a way that the direction of rotation and the speed of a plate are independent of those of another plate; each plate engaging a drive-wheel roller by means of a track (10) or flat peripheral surface (peripheral motorization).

15. Apparatus according to claim 1 and any one of the claims 3 to 12, characterized by the fact that all the plates (perforated or blind) are driven at a uniform speed by a central shaft (24) which is driven by an electric motor (MC) located below the container (centralized motorization).

16. Apparatus according to claim 15, characterized by the fact that the central shaft (24) is coupled to each plate by means of a flexible coupling (25) capable of allowing and taking up slight lateral displacements of the plate.

17. Apparatus according to claims 15 and 16, characterized by the fact that the central shaft (24) is protected from the materials in the chamber which it crosses by means of a cylindrical sleeve (26) surrounding the shaft and which is rotated by the plate of the chamber.

## Patentansprüche

1. Vorrichtung für die mechanische Vorsortierung von Materialien, worin die Sortierung in unterschiedliche Bestandteile mittels einer Anzahl von Sortierplatten erreicht wird, die eine über der anderen in der Innenseite eines zylindrischen Metallbehälters angeordnet sind und kalibrierte Perforierungen auf einer solchen Weise aufweisen, daß während ihrer Drehung rund um die Achse des Containers ein Teil des auszusortierenden Materials wegen der Fliehkraft zur Außenseite hin ausgeworfen wird, während der nicht aussortierte, verbleibende Teil in die Sortierplatte darunter durch die kalibrierten Perforierungen hindurchtritt; die Abmessung der Perforierungen nimmt, von der ersten Platte an der Oberseite zur nächsten an der Unterseite, fortlaufend ab, gekennzeichnet durch die Tatsache, daß die Wählplatten aus ebenen Platten oder Scheiben (D1, D2, D3) bestehen, die jeweils kalibrierte Perforierungen in einem mittleren, ringförmigen Teil (9) aufweisen, und die untere Grenze einer Sortierkammer festsetzen, die unmittelbar mit der Außenseite mittels mindestens einer seitlichen Öffnung (U1, U2, U3) in der Behälterwand verbunden ist, und wobei (jede Platte) in Umfangsrichtung abgedichtet ist und um die Achse des Behälters in einem Niveau unter der seitlichen Öffnung rotiert, zum Auswerfen des ausgesonderten Materials (Bestandteils) zur Außenseite hin auch wegen eines Luftstroms, der in der Kammer erzeugt wird, und daß die erste Sortierkammer (C1) das Material durch sich bewegende Teile (MR) aufnimmt, die rund um die Achse des Behälters rotieren und die untere Grenze der Beladungskammer (C) für das zu behandelnde Material festsetzen, bevorzugt festen Stadtmüll, die die Säcke, die den Müll enthalten, aufreißen und das Material auf eine solche Weise aufschließen, daß die Abmessung verringert wird und es für die nachfolgenden Behandlungen der Aussortierung der Bestandteile geeignet wird, und daß die letzte Sortierkammer (C3) das nicht ausgeworfene Restmaterial in eine Aufnahme- und Auswurfkammer (CF) einspeist, die unterhalb angeordnet ist, und zwar durch die Perforierungen der jeweiligen Platte (D3); wobei die Aufnahmekammer unmittelbar mit der Außenseite mittels mindestens einer seitlichen Öffnung (UF) in der Behälterwand verbunden ist und eine ungelochte, ebene Platte oder Scheibe (DC) aufweist, die ihre untere Grenze an einem Niveau unterhalb der seitlichen Öffnung festsetzt, in Umfangsrichtung abgedichtet ist und um die Achse des Behälters rotiert, für den vollständigen Auswurf der letzten Bestandteile zur Außenseite hin durch die seitliche Öffnung auch wegen eines Luftstroms, wie er in der Kammer erzeugt wird.

2. Vorrichtung nach Anspruch 1, gekennzeichnet durch die Tatsache, daß die rotierenden Teile (MR) aus zwei koaxialen Platten (DR, DF) bestehen, die in Umfangsrichtung frei von der Behälterwand rotieren, von denen

- die erste (DR - die Sack-Aufreißplatte), die obere der zwei, an der Unterseite der Beladungskammer (C) rotiert und eine Anzahl von radialen Klingen (2) aufweist, die mit einer Anzahl fester radialer Klingen (3) zusammenwirken, die in Umfangsrichtung an der Innenseite der Wand des Behälters (1) festgelegt sind, und zwar auf eine solche Weise, daß während der Drehung der Platte wegen der Wechselwirkung zwischen den bewegten und festen Klingen das Aufreißen der Säcke, die die Materialien enthalten, und ein erstes Auflockern und Aufschließen der Materialien erreicht wird, und

- die zweite (DF - die Aufschließplatte) schneller rotiert als die erste Platte und an ihrem Umfang eine Anzahl radialer Messer (4) aufweist, die bevorzugt krummsäbelförmig sind, und zwar auf eine solche Weise, daß während der Drehung der Platte das Auflockern und Aufschließen der Materialien fertiggestellt wird,

wobei der Durchtritt des Materials von der Beladungskammer (C) zur ersten Sortierkammer (C1) über den Umfang der Platten (Umfangsdurchtritt) erfolgt; und wobei während dieses Durchtritts das Material, insbesondere Glas, Keramikmaterial und dergleichen, bevorzugt nach dem ersten Aufschließen der Zertrümmerung mittels Hämmern (5) unterzogen wird, die durch eine der beiden Platten gedreht werden.

3. Vorrichtung nach den Ansprüchen 1 und 2, gekennzeichnet durch die Tatsache, daß das Material von der Beladungskammer (C) und den Sortierkammern, das auf die nachfolgende Sortierkammer überführt werden soll, dem mittleren perforierten Teil (9) der darunterliegenden Platte durch einen Trichter zugeführt wird; wobei der Trichter (T) unterhalb der rotierenden Teile zum Sackaufreißen und -aufschließen vom Behälter getragen wird; wobei die anderen Trichter (T1, T2) von den jeweiligen Sortierplatten getragen werden, die sie beladen; und wobei jeder Trichter an seinem unteren Teil einen mittigen Rührer für das Material aufweist, der beim Lauf auf eine solche Weise arbeitet, daß er das Material, das in der Ringzone (9a) der darunterliegenden Platte rund um die Drehachse liegenbleiben kann, gegen den außen liegenden perforierten Teil (9) der Platte geschoben wird.

4. Vorrichtung nach Anspruch 3, gekennzeichnet durch die Tatsache, daß der Rührer für das Material aus mindestens zwei Schaufeln (18) besteht, die mittels Schwenkarmen (19) mit dem darüberliegenden Trichter verbunden sind.

5. Vorrichtung nach Anspruch 1 und entweder nach Anspruch 3 oder 4, gekennzeichnet durch die Tatsache, daß die Umfangsabdichtung der Platten (perforiert oder ungelocht) mittels einer kreisförmigen, elastischen Membrane oder Bahn (11) erreicht wird, die am Umfang der Platte befestigt ist und von diesen vorsteht, welche vom Rand auf einem Dichtungsring (17) frei rotiert, der an der Innenseite der Behälterwand gerade unter der seitlichen Öffnung angeordnet ist.

6. Vorrichtung nach Anspruch 1 und irgendeinem der Ansprüche 3 bis 5, gekennzeichnet durch die Tatsache daß die Ventilation der Sortierkammern und der abschließenden Aufnahmekammer mindestens mittels radialer Rippen (12) erreicht wird, die in Umfangsrichtung auf dem perforierten Teil (9) der jeweiligen Platte (perforiert oder ungelocht) angeordnet sind und unter unterschiedlichen Winkeln zu ihren eigenen Achsen während der Einstellphase befestigt werden können.

7. Vorrichtung nach Anspruch 1 und irgendeinem der Ansprüche 3 bis 6, gekennzeichnet durch die Tatsache daß der perforierte Teil (9) der Sortierplatten eine konische Fläche aufweist, die zum Umfang hin ansteigt, was die Verlagerung des Materials zum Umfang hin verlangsamt.

8. Vorrichtung nach Anspruch 1 und irgendeinem der Ansprüche 3 bis 7, gekennzeichnet durch die Tatsache, daß die Sortierplatten entsprechend dem perforierten Teil (9) Vorsprünge (14') aufweisen, die von der Ebene vorspringen und die Verlagerung des Materials zum Umfang hin behindern.

9. Vorrichtung nach Anspruch 1 und irgendeinem der Ansprüche 3 bis 8, gekennzeichnet durch die Tatsache, daß die Sortierplatten entsprechend dem perforierten Umfangsteil (9) vorspringende, abgewinkelte Öffnungen (14) aufweisen, die imstande sind, das noch nicht angenommene Material zu ergreifen und dessen Durchgang zur darunterliegenden Kammer zu erleichtern.

10. Vorrichtung nach Anspruch 1 und irgendeinem der Ansprüche 3 bis 9, gekennzeichnet durch die Tatsache, daß jede Platte (perforiert oder ungelocht) mit einer flachen Umfangsfläche (Laufbahn 10) auf mindestens drei Rollen aufsitzt, die bevorzugt gummiert sind, unter 120° zueinander angeordnet sind und von der Innenwand des Behälters getragen sind.

11. Vorrichtung nach Anspruch 1 und irgendeinem der Ansprüche 3 bis 10, gekennzeichnet durch die Tatsache, daß jede Platte (perforiert oder ungelocht) im Behälter mittels mindestens dreier fester Zentrierungsvorrichtungen zentriert ist, die im Umfang 120° zueinander versetzt federnd montiert sind, in der Lage sind, geringe leichte Versetzungen der Platte zuzulassen und aufzunehmen und von der Innenwand des Behälters getragen sind.

12. Vorrichtung nach Anspruch 11, gekennzeichnet durch die Tatsache, daß jede Zentriervorrichtung aus einer leerlaufenden Rolle (20) zusammengesetzt ist, die gegen den Rand der Platte mittels einer Federmontage (21) andrückt.

13. Vorrichtung nach Anspruch 1 und 2, gekennzeichnet durch die Tatsache, daß die sich bewegenden Teile (DR, DF) zum Aufreißen der Säcke und zum Aufschließen des Materials von einem Elektromotor (M) angetrieben sind, der vom Behälter getragen ist, und zwar mittels einer rohrförmigen Doppelwelle (6, 7) mit unterschiedlichen Drehzahlen, wobei die Welle (7) mit höherer Drehzahl mit der Aufschließplatte (DF) verbunden ist.

14. Vorrichtung nach Anspruch 1 und irgendeinem der Ansprüche 3 bis 12, gekennzeichnet durch die Tatsache, daß jede Platte (perforiert oder ungelocht) durch eine Antriebsrad-Rolle (15') angetrieben ist, die von ihrem jeweiligen Elektromotor (M1, M2, M3, MF) auf eine solche Weise angetrieben ist, daß die Drehrichtung und die Drehzahl einer Platte unabhängig von jenen der anderen Platte sind; wobei jede Platte mit einer Antriebsrad-Rolle mittels einer Laufbahn (10) oder einer flachen Umfangsfläche (Umfangsantrieb) in Eingriff steht.

15. Vorrichtung nach Anspruch 1 und irgendeinem der Ansprüche 3 bis 12, gekennzeichnet durch die Tatsache, daß alle die Platten (perforiert oder ungelocht) mit gleichförmiger Drehzahl durch eine Mittelwelle (24) angetrieben sind, die von einem Elektromotor (MC) angetrieben wird, der unterhalb des Behälters angeordnet ist (Mittelantrieb).

16. Vorrichtung nach Anspruch 15, gekennzeichnet durch die Tatsache, daß die Mittelwelle (24) mit jeder Platte mittels einer flexiblen Kupplung (25) gekoppelt ist, die in der Lage ist, geringe seitliche Versetzungen der Platte zuzulassen und aufzunehmen.

17. Vorrichtung nach den Ansprüchen 15 und 16, gekennzeichnet durch die Tatsache, daß die Mittelwelle (24) vor den Materialien in der Kammer, die sie durchsetzt, mittels einer zylindrischen Hülse (26) geschützt ist, die die Welle umgibt und die durch die Platte der Kammer gedreht wird.

**Revendications**

1. Dispositif pour la sélection mécanique des matériaux, dans lequel le tri en différents composants est réalisé au moyen de plusieurs plateaux de tri placés l'un au dessus de l'autre à l'intérieur d'une cuve métallique cylindrique, munis de perforations calibrées, de façon telle que, pendant leur rotation autour de l'axe de la cuve, une partie de matériaux à trier est éjectée vers l'extérieur sous l'effet de la force centrifuge, tandis que la partie restante non sélectionnée passe au plateau de tri inférieur à travers des perforations calibrées, la dimension de perforations décroissant en passant du premier plateau du dessus au dernier plateau du fond, caractérisé en ce que les plateaux de tri consistent en plateaux étagés ou disques (D1, D2, D3), chacun étant muni de perforations calibrées dans sa partie annulaire intermédiaire (9) et constituant la limite inférieure d'une chambre de tri communicant avec l'extérieur au moyen d'au moins une ouverture latérale (U1, U2, U3) pratiquée dans la paroi de la cuve, chaque plateau étant rendu étanche à sa périphérie et tournant autour de l'axe de la cuve en dessous de l'ouverture latérale pour l'éjection vers l'extérieur du matériau sélectionné (composant), également sous l'effet du courant d'air engendré dans la chambre et en ce que la première chambre de tri (C1) reçoit les matériaux par l'intermédiaire des organes (MR) tournant autour de l'axe de la cuve et constituant la limite inférieure de la chambre de chargement (C) des matériaux à traiter, notamment des déchets solides urbains, déchirant les sacs contenant les déchets et brisant les matières de façon à réduire leur taille et les rendre aptes pour les opérations successives de tri de composants et en ce que la dernière chambre de tri (C3) alimente en matériau résiduel non éjecté la chambre de réception et d'éjection (CF) placée en dessous des perforations du plateau respectif (D3); ladite chambre de réception communicant directement avec l'extérieur au moyen d'au moins une ouverture latérale (UF) de la paroi de la cuve et comprenant un plateau ou disque d'étage non perforé (DC) constituant sa limite inférieure en dessous de l'ouverture latérale, rendu étanche à la périphérie et tournant autour de l'axe de la cuve pour éjecter en totalité vers l'extérieur les derniers composants à travers l'ouverture latérale, aussi sous l'effet du courant d'aire engendré dans la chambre.

2. Dispositif selon la revendication 1, caractérisé en ce que les organes rotatifs (MR) consistent en deux plateaux coaxiaux (DR, DF) dont la périphérie tourne librement par rapport à la paroi de la cuve, dont:

- le premier (DR - plateau déchirant les sacs) placé au dessus de l'autre plateau, tournant au fond de la chambre de chargement (C) et muni de plusieurs lames radiales (2) qui coopèrent avec plusieurs lames radiales fixes (3) placées à la paroi intérieure de la cuve (1) de façon telle, qu'on réalise, pendant la rotation du plateau, à cause de l'interaction des lames tournantes et fixes, la déchirure des sacs contenant des matériaux et un premier relâchement et bris de matériaux, et

- le second (DF - plateau qui brise) tournant plus vite que le premier plateau, muni à sa périphérie de plusieurs couteaux radiaux (4) en forme de croissant de préférence, de façon telle, que, pendant la rotation du plateau, le relâchement et le bris de matériaux soient achevés.

3. Dispositif selon la revendication 1 ou 2, caractérisé en ce que, pour être transférés de la chambre de chargement (C) vers les chambres de tri, les matériaux sont dirigés vers la partie centrale annulaire (9) du plateau inférieur par une trémie; la trémie (T) située en dessous des organes tournants réalisant le déchirement des sacs et le bris étant supportée par la cuve; les autres trémies (T1, T2) étant portées par les plateaux de tri respectifs qu'elles chargent; chaque trémie ayant à sa partie inférieure un agitateur des matériaux central, qui en fonctionnement repousse les matériaux qui pourraient s'accumuler dans la partie annulaire (9a) du plateau inférieur autour de son centre de rotation, vers la partie perforée extérieurement (9) du plateau.

4. Dispositif selon la revendication 3, caractérisé en ce que l'agitateur des matériaux comprend au moins deux palettes (18) connectées à la trémie de dessus au moyen de bras oscillants (19).

5. Dispositif selon la revendication 1 et la revendication 3 ou 4, caractérisé en ce que la périphérie des plateaux (perforées ou non) est rendue étanche au moyen d'une membrane ou feuille (11) circulaire et élastique, fixée et faisant saillie à la périphérie du plateau, qui tourne librement au contact d'un joint annulaire (17) placé à l'intérieur de la paroi de la cuve, juste en dessous de l'ouverture latérale.

6. Dispositif selon la revendication 1 et l'une des revendications 3 à 5, caractérisé en ce qu'on réalise la ventilation des chambres de tri et de la chambre finale de réception au moins par des ailettes radiales (12) placées circonférentiellement sur la partie perforée (9) du plateau respectif (perforé ou non) qui peuvent être fixées au moment du montage à des angles variés par rapport à leurs axes.

7. Dispositif selon la revendication 1 et l'une des revendications 3 à 6, caractérisé en ce que la partie perforée (9) de plateaux de tri possède une surface conique s'évasant vers sa périphérie, de façon à ralentir le glissement des matériaux vers la périphérie.

8. Dispositif selon la revendication 1 et l'une des revendications 3 à 7, caractérisé en ce que les plateaux de tri possèdent dans leur partie perforée (9) des projections en saillie (14') partant des endroits pour empêcher le déplacement des matériaux vers la périphérie.

9. Dispositif selon la revendication 1 et l'une des revendications 3 à 8, caractérisé en ce que les plateaux de tri possèdent dans leur partie perforée périphériquement (9) des ouvertures en saillie à axe incliné (14) aptes à saisir le matériau qui n'a pas encore été intercepté et à favoriser son passage vers la chambre inférieure.

10. Dispositif selon la revendication 1 et l'une des revendications 3 à 9, caractérisé en ce que chaque plateau (perforé ou non) repose par sa surface périphérique plane (piste 10) sur au moins trois rouleaux, revêtus de caoutchouc de préférence, placés à 120° l'un de l'autre et fixés sur la paroi intérieure de la cuve.

11. Dispositif selon la revendication 1 et l'une des revendications 3 à 10, caractérisé en ce que chaque plateau (perforé ou non) est centré à l'intérieur de la cuve au moyen d'au moins trois organes de centrage montés sur ressort à la périphérie et décalés l'un de l'autre de 120°, aptes à tolérer et à compenser de légers déplacements latéraux du plateau et fixés à la paroi intérieure de la cuve.

12. Dispositif selon la revendication 11, caractérisé en ce que chaque organe de centrage comprend un rouleau tournant fou (20) appliqué contre le bord du plateau par un montage à ressort (21).

13. Dispositif selon la revendication 1 ou 2, caractérisé en ce que les organes mobiles (DR, DF) servant à déchirer les sacs et à briser les matériaux sont entraînés par un moteur électrique (M) fixé à la cuve, au moyen d'un arbre tubulaire double (6, 7), à des vitesses différentes, l'arbre tournant plus vite (7) étant connecté au plateau (DF) réalisant le bris.

14. Dispositif selon la revendication 1 et l'une des revendications 3 à 12, caractérisé en ce que chaque plateau (perforé ou non) est entraîné au moyen d'un galet d'entraînement (15') entraîné par son moteur électrique respectif (M1, M2, M3, MF) de façon telle, que le sens et la vitesse de rotation d'un plateau soient indépendants de ceux d'un autre plateau; chaque plateau ayant une piste (10) ou une surface plane périphérique (motorisation périphérique), sur laquelle roule le galet d'entraînement.

15. Dispositif selon la revendication 1 et l'une des revendications 3 à 12, caractérisé en ce que tous les plateaux (perforés ou non) sont entraînés à vitesse constante par un arbre central (24) qui est entraîné par un moteur électrique (MC) logé en dessous de la cuve (motorisation centralisée).

16. Dispositif selon la revendication 15, caractérisé en ce que l'arbre central (24) est couplé à chaque plateau au moyen d'un embrayage élastique (25) apte à tolérer et à compenser de légers déplacements latéraux du plateau.

17. Dispositif selon les revendications 15 et 16, caractérisé en ce que l'arbre central (24) est protégé des matériaux dans la chambre, que ces matériaux traversent, au moyen d'un manchon cylindrique (26) entourant l'arbre et qui est entraîné en rotation par le plateau de la chambre.

*FIG. 1*

FIG. 2

_FIG. 3_

_FIG. 4_

_FIG. 5_

_FIG. 6_

FIG. 7

FIG. 8

FIG. 9

FIG. 10

FIG. 11